# EUROPÄISCHE PATENTSCHRIFT

(11) **EP 1 081 000 B1**
(45) Veröffentlichungstag und Bekanntmachung des Hinweises auf die Patenterteilung: **17.01.2007**
(21) Anmeldenummer: 00116378.1
(22) Anmeldetag: 28.07.2000
(51) Int. Cl.: B60R 25/00, G07C 9/00

(54) **Sicherungseinrichtung**
Security device
Dispositif de sécurité

(30) Priorität: 31.08.1999 DE 19941346
(43) Veröffentlichungstag der Anmeldung: 07.03.2001
(73) Patentinhaber: SIEMENS AKTIENGESELLSCHAFT, 80333 München (DE)
(72) Erfinder: Berberich, Reinhold, 60439 Frankfurt (DE)

(56) Entgegenhaltungen:
- EP-A- 0 802 497
- EP-A- 0 926 021
- EP-A- 0 955 216
- EP-A- 0 999 103
- GB-A- 2 310 300
- GB-A- 2 311 155
- US-A- 5 898 230

## Beschreibung

Die Erfindung betrifft eine Einrichtung zum Betätigen einer Sicherungseinrichtung, vorzugsweise zur Sicherung eines Kraftfahrzeuges gegen unbefugtes Benutzen, wobei ein Steuergerät Mittel zur Aussendung eines ersten codierten elektromagnetischen Signals als Reizsignal aufweist, wobei ein tragbarer Funkschlüssel Mittel zum Empfang des Reizsignals und zur Aussendung eines zweiten codierten Signals als Freigabesignal aufweist, wobei das Steuergerät mit der Sicherungseinrichtung verbunden ist und diese im Falle des Empfangs und Erkennens des Freigabesignals betätigt, wobei sowohl das Steuergerät als auch der Funkschlüssel über Mittel zur Veränderung der Trägerfrequenz der codierten elektromagnetischen Signale verfügen und wobei das Steuergerät und der Funkschlüssel während der Signalübermittlung diese Frequenz in einer nur dem Steuergerät und dem Funkschlüssel bekannten Weise verändern.

Derartige Funkschlüssel werden heutzutage, beispielsweise zum berührungslosen Entriegeln der Türen von Kraftfahrzeugen, benutzt. Sie sind beispielsweise aus WO 92/18732 bekannt.

Sind die bei solchen konventionellen Systemen statischen Sende- und Empfangsfrequenzen bekannt, kann durch relativ einfache Sende-Empfangsgeräte das Reizsignal auch über größere Distanzen vom Fahrzeug zum autorisierten Benutzer weitergeleitet und damit eine Schlüsselreizung vorgenommen werden. Werden auch für die Rückübertragung des Antwortsignals entsprechende Sender und Empfänger eingesetzt, kann auch das Antwortsignal zum Fahrzeug zurückgeleitet werden und für einen unberechtigten Zugriff auf das Fahrzeug genutzt werden.

Um dies zu erschweren, wird beispielsweise in der EP 0 926 021 A2 gemäß dem Oberbegriff des Anspruchs 1 ein System vorgeschlagen, bei dem der Funkschlüssel das Freigabesignal in mehr als einem Frequenzkanal übertragen kann. Das Steuergerät ist entsprechend in der Lage, den Bereich sämtlicher möglicher Frequenzkanäle abzutasten. Alternativ teilt das Steuergerät dem Funkschlüssel mit, in welchen Frequenzkanälen die nächste Übertragung stattfinden soll, oder der Funkschlüssel teilt dem Steuergerät mit, in welchen Kanälen er als nächstes sendet. Diese Nachrichten, in denen die als nächstes verwendeten Frequenzkanäle identifiziert sind, können wieder missbräuchlich abgehört werden.

Aufgabe der vorliegenden Erfindung ist es, eine Einrichtung zum komfortablen, berührungslosen Betätigen von Sicherungseinrichtungen, insbesondere der Zentralverriegelung und der Wegfahrsperre von Kraftfahrzeugen, anzugeben, die einen unberechtigten Zugriff praktisch unmöglich macht.

Diese Aufgabe wird mit der Erfindung gemäß Patentanspruch 1 gelöst.

Durch das Wechseln der Trägerfrequenz wird es aufgrund der nur sehr kurzen gesamten Übertragungsdauer praktisch unmöglich, die Signale abzuhören und zum unbefugten Öffnen der Sicherungseinrichtung zu missbrauchen.

Um ein schnelles Umschalten sowohl des Funkschlüssels als auch des Steuergerätes auf die jeweils nächste Trägerfrequenz zu gewährleisten, ist bei der Erfindung vorgesehen, dass die empfänger- und senderseitige Trägerfrequenzauswahl mittels einer codierten Information in dem Reizsignal mittels eines kryptographischen Verfahrens in dem Funkschlüssel und im Steuergerät unabhängig voneinander bestimmt wird. Da die notwendige Information auf beiden Seiten parallel erzeugt wird, entfällt die Übertragung dieser Information zwischen dem Steuergerät und dem Funkschlüssel.

Als Basis für die Generierung der separaten Trägerfrequenzen dieses Frequency-Hoppings kann der gleiche Kryptoalgorithmus wie für die normale Telegrammauthentifizierung benutzt werden. Der Authentifizierungsanteil des Freigabesignals ist dabei gleichzeitig Basis für die Auswahl der diskreten Trägerfrequenzen. Dies hat den Vorteil, dass kein zusätzlicher Rechenzeitaufwand für die Generierung dieser Daten benötigt wird.

Bei einer ersten Ausgestaltung der Erfindung ist vorgesehen, dass der Funkschlüssel über einen schmalbandigen bezüglich seiner Sendefrequenz steuerbaren Sender verfügt und dass der Funkschlüssel beim Aussenden von Signalen seine Sendefrequenz in zeitlichen Abständen verändert. Zudem verfügt das Steuergerät über einen abstimmbaren schmalbandigen Empfänger mit gleichem Frequenzbereich wie der Sender des Funkschlüssels.

Eine weitere Ausgestaltung der Erfindung sieht vor, dass die Weise, wie die Trägerfrequenz geändert werden soll, als codierte Information zur Übermittlung an den Funkschlüssel in dem Reizsignal enthalten ist.

Dabei kann vorgesehen sein, dass das Reizsignal eine Zufallszahl enthält und die Bestimmung der Trägerfrequenzen durch Anwendung eines Kryptoalgorithmus auf dieses Reizsignal und dabei insbesondere auf die im Reizsignal enthaltene Zufallszahl vorgenommen wird.

Bei einer weiteren Ausgestaltung der Erfindung ist vorgesehen, dass die Signalübertragung über ein Spektrum unterschiedlicher Trägerfrequenzen geschieht und dass das Freigabesignal eine codierte Information zur Modulation dieses Spektrums enthält. Durch die Verwendung dieser Spread-Spectrum-Übertragung wird die Signalübertragung ebenfalls sehr sicher.

Dabei kann beispielsweise der Authentifizierungsanteil des Freigabesignals als Basis für die Erzeugung der Modulationssequenz des Spread-Spectrums dienen. Alle Vorteile hinsichtlich Rechenzeitaufwand usw. bleiben dabei erhalten. Durch sende- und empfängerseitige Kenntnis der aktuellen und weiteren spektralen Verteilung des Sendesignals entfällt beim Spread-Spectrum-Verfahren außerdem das sonst notwendige Synchronisieren bzw. Einrasten zwischen Sender und Empfänger.

Ausführungsbeispiele der Erfindung sind in der Zeichnung anhand mehrerer Figuren dargestellt und in der nachfolgenden Beschreibung näher erläutert. Es zeigt:
- Fig. 1: schematisches Diagramm zur Ableitung von Sendekanälen aus einem Reizsignal und
- Fig. 2: Diagramme der resultierenden Sendespektren.

Gleiche Teile sind in den Figuren mit gleichen Bezugszeichen versehen.

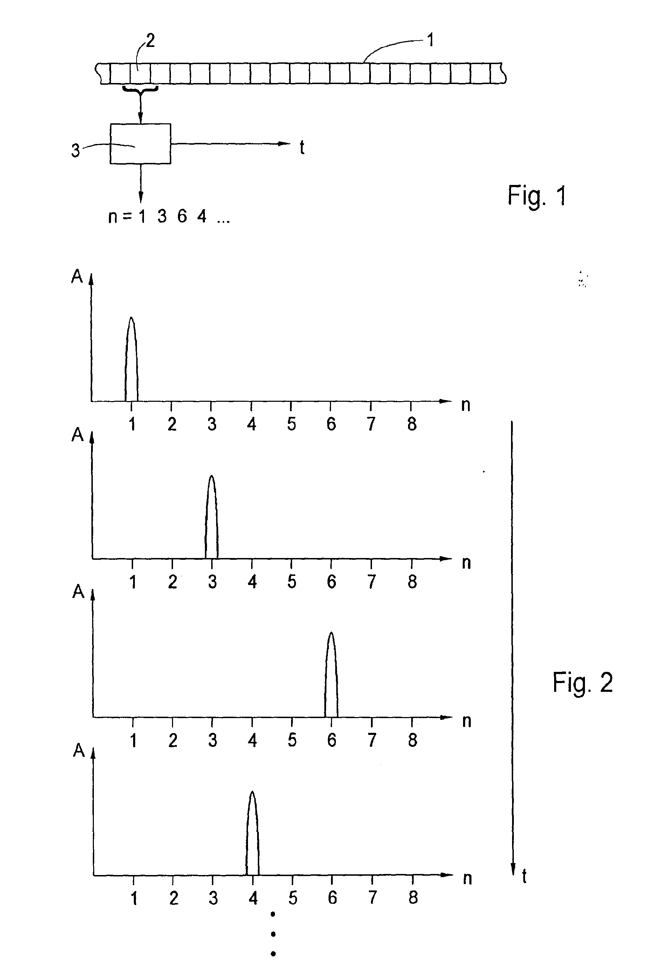

Fig. 1 zeigt, wie ein Funkschlüssel aus dem vom Steuergerät gesendeten Reizsignal 1 (Challenge-Signal) die Reihenfolge der zu benutzenden, beiden Seiten bekannten Übertragungskanäle n für die Übertragung von Signalen bestimmt.

Dazu wird das Reizsignal 1 in einen Ringpuffer geladen und schrittweise über einen Kryptoalgorithmus 3 geleitet. Der Kryptoalgorithmus 3 schaltet den aus Bits bestehenden Datenstrom des Reizsignals 1 nach einer bestimmten Datenmenge oder nach einer bestimmten Zeitdauer t weiter und generiert so als Ergebnis den für die nächste Übertragungssequenz zu verwendenden Sendekanal. Der gleiche Vorgang läuft parallel auch im Steuergerät ab, jedoch werden hier als Ergebnis die jeweils nächsten Empfangskanäle bestimmt.

Die schnelle, schmalbandige und für Außenstehende nicht vorhersehbare Abfolge der Umschaltung der Trägerfrequenz macht es unmöglich, mit einer einzigen Relais-Funkstrecke unauthorisierten Zugang zu einem

Fahrzeug zu erhalten.

In Fig. 2 sind die daraus resultierenden Sendespektren (A=Amplitude) des Funkschlüssels bei der Aussendung seines Freigabesignals dargestellt. Jeweils nach dem Verstreichen einer bestimmten Zeitdauer t oder einer bestimmten Anzahl von Datenbits wird, entsprechend der zuvor bestimmten Reihenfolge, auf einen anderen Kanal umgeschaltet. Das Steuergerät schaltet seine Empfangseinrichtung ebenfalls synchron um, so daß eine zügige Datenübertragung gewährleistet ist.

## Patentansprüche

1. Einrichtung zum Betätigen einer Sicherungseinrichtung, zur Sicherung eines Kraftfahrzeuges gegen unbefugtes Benutzen, wobei
- ein Steuergerät Mittel zur Aussendung eines ersten codierten elektromagnetischen Signals als Reizsignal (1) aufweist,
- ein tragbarer Funkschlüssel Mittel zum Empfang des Reizsignals (1) und zur Aussendung eines zweiten codierten Signals als Freigabesignal aufweist,
- das Steuergerät mit der Sicherungseinrichtung verbunden ist und diese im Falle des Empfangs und Erkennens des Freigabesignals betätigt,
- sowohl das Steuergerät als auch der Funkschlüssel über Mittel zur Veränderung der Trägerfrequenz der codierten elektromagnetischen Signale verfügen und
- das Steuergerät und der Funkschlüssel während der Signalübermittlung diese Frequenz in einer nur dem Steuergerät und dem Funkschlüssel bekannten Weise verändern,
**dadurch gekennzeichnet,**
- **dass** die Weise, wie die Trägerfrequenz geändert werden soll, als codierte Information zur Übermittlung an den Funkschlüssel in dem Reizsignal (1) enthalten ist und
- **dass** die empfänger- und senderseitige Trägerfrequenzauswahl mittels der codierten Information des Reizsignals mittels eines kryptographischen Verfahrens in dem Funkschlüssel und im Steuergerät unabhängig voneinander bestimmt wird.

2. Einrichtung nach Anspruch 1, **dadurch gekennzeichnet, dass** der Funkschlüssel über einen schmalbandigen bezüglich seiner Sendefrequenz steuerbaren Sender verfügt und dass der Funkschlüssel beim Aussenden von Signalen seine Sendefrequenz in zeitlichen Abständen verändert.

3. Einrichtung nach Anspruch 2, **dadurch gekennzeichnet, dass** das Steuergerät über einen abstimmbaren schmalbandigen Empfänger mit gleichem Frequenzbereich wie der Sender des Funkschlüssels verfügt.

4. Einrichtung nach einem der vorhergehenden Ansprüche, **dadurch gekennzeichnet, dass** das Reizsignal (1) eine Zufallszahl enthält und die Bestimmung der Trägerfrequenzen durch Anwendung eines Kryptoalgorithmus (3) auf dieses Reizsignal (1) und dabei insbesondere auf die im Reizsignal (1) enthaltene Zufallszahl vorgenommen wird.

5. Einrichtung nach einem der vorhergehenden Ansprüche, **dadurch gekennzeichnet, dass** die Signalübertragung über ein Spektrum unterschiedlicher Trägerfrequenzen geschieht und dass das Freigabesignal eine codierte Information zur Modulation dieses Spektrums enthält.

## Claims

1. Facility for activating a security facility, to protect a motor vehicle against unauthorised use, with
- a control device having means to transmit a first coded electromagnetic signal as a challenge signal (1),
- a portable radio key having means to receive the challenge signal (1) and to transmit a second coded signal as an enable signal,
- the control device being connected to the security facility and activating it when it receives and identifies the enable signal,
- both the control device and the radio key having means to change the carrier frequency of the coded electromagnetic signals and
- the control device and the radio key changing this frequency in a manner known only to the control device and the radio key during signal transmission,
**characterised in that**
- the manner, in which the carrier frequency is to be changed, is contained in the challenge signal (1) as coded information for transmission to the radio key and
- the receiver and transmitter side carrier frequency selection is determined by means of a cryptographic method independently in the radio key and the control device using the coded information of the challenge signal.

2. Facility according to claim 1, **characterised in that** the radio key has a narrow-band transmitter, the transmit frequency of which can be controlled, and the radio key changes its transmit frequency at time intervals when transmitting signals.

3. Facility according to claim 2, **characterised in that** the control device has a tuneable narrow-band receiver with the same frequency range as the radio key transmitter.

4. Facility according to one of the preceding claims, **characterised in that** the challenge signal (1) contains a random number and the carrier frequencies are determined by applying a crypto-algorithm (3) to said challenge signal (1) and thereby in particular to the random number contained in the challenge signal (1).

5. Facility according to one of the preceding claims, **characterised in that** the signal is transmitted by way of a spectrum of different carrier frequencies and the enable signal contains coded information for modulating said spectrum.

## Revendications

1. Dispositif destiné à commander un dispositif de sécurité pour la sécurité d'un véhicule automobile contre une utilisation non autorisée,
- un dispositif de commande présentant des moyens destinés à émettre un premier signal électromagnétique codé, en tant que signal d'excitation (1),
- une clé à télécommande portable présentant des moyens destinés à la réception du signal d'excitation (1) et à l'émission d'un deuxième signal codé, en tant que signal de libération,
- le dispositif de commande étant raccordé au dispositif de sécurité et commandant celui-ci en cas de réception et d'identification du signal de libération,
- aussi bien le dispositif de commande que la clé à télécommande disposant de moyens pour modifier la fréquence porteuse des signaux électromagnétiques codés et
- le dispositif de commande et la clé à télécommande modifiant, pendant la transmission du signal, cette fréquence d'une manière connue seulement du dispositif de commande et de la clé à télécommande,
**caractérisé en ce**
- **que** la manière dont la fréquence porteuse doit être modifiée est contenue dans le signal d'excitation (1) comme information codée pour la transmission à la clé à télécommande et
- en ce que la sélection de la fréquence porteuse, côté récepteur et côté émetteur, est déterminée au moyen de l'information codée du signal d'excitation à l'aide d'un procédé cryptographique dans la clé à télécommande et dans le dispositif de commande, indépendamment l'un de l'autre.

2. Dispositif selon la revendication 1, **caractérisé en ce que** la clé à télécommande dispose d'un émetteur à bande étroite, commandable quant à sa fréquence d'émission, et **en ce que** la clé à télécommande, lors de l'émission de signaux, modifie sa fréquence d'émission à intervalles de temps.

3. Dispositif selon la revendication 2, **caractérisé en ce que** le dispositif de commande dispose d'un récepteur à bande étroite accordable ayant la même gamme de fréquence que l'émetteur de la clé à télécommande.

4. Dispositif selon l'une quelconque des revendications précédentes, **caractérisé en ce que** le signal d'excitation (1) comprend un nombre aléatoire et **en ce que** la détermination des fréquences porteuses est réalisée en appliquant un algorithme cryptographique (3) à ce signal d'excitation (1) et en particulier au nombre aléatoire contenu dans le signal d'excitation (1).

5. Dispositif selon l'une quelconque des revendications précédentes, **caractérisé en ce que** la transmission du signal a lieu par l'intermédiaire d'un spectre de différentes fréquences porteuses et **en ce que** le signal de libération contient une information codée pour la modulation de ce spectre.
